# EUROPÄISCHE PATENTSCHRIFT

(11) **EP 1 115 981 B1**
(45) Veröffentlichungstag und Bekanntmachung des Hinweises auf die Patenterteilung: **31.05.2006**
(21) Anmeldenummer: 00954324.0
(22) Anmeldetag: 12.07.2000
(51) Int. Cl.: F04D 13/06

(54) **FLÜSSIGKEITSPUMPE MIT KLAUENPOLSTATOR**
LIQUID PUMP WITH A CLAW POLE STATOR
POMPE A LIQUIDES A STATOR A POLES A GRIFFES

(30) Priorität: 22.07.1999 DE 19934382
(43) Veröffentlichungstag der Anmeldung: 18.07.2001
(73) Patentinhaber: ROBERT BOSCH GMBH, 70442 Stuttgart (DE)
(72) Erfinder: LENTZ, Gerd, D-77815 Buehl (DE); HEIER, Christoph, D-76473 Iffezheim (DE); HENSCHEL, Matthias, D-77836 Rheinmuenster (DE); KRAUTH, Wolfgang, D-77855 Achern-Sasbachried (DE)
(86) Internationale Anmeldenummer: PCT/DE2000/002266
(87) Internationale Veröffentlichungsnummer: WO 2001/007789

(56) Entgegenhaltungen:
- GB-A- 2 042 279
- US-A- 3 853 429
- US-A- 4 274 024
- US-A- 4 363 984
- US-A- 4 695 419
- PATENT ABSTRACTS OF JAPAN vol. 1995, no. 11, 26. Dezember 1995 (1995-12-26) & JP 07 208380 A (TGK CO LTD), 8. August 1995 (1995-08-08)
- PATENT ABSTRACTS OF JAPAN vol. 1999, no. 11, 30. September 1999 (1999-09-30) & JP 11 166500 A (TOSHIBA AVE CO LTD;TOSHIBA CORP), 22. Juni 1999 (1999-06-22)

## Beschreibung

### Stand der Technik

Die Erfindung betrifft eine elektrisch betriebene Flüssigkeitspumpe, insbesondere eine Kühlwasserpumpe für den Kühlkreislauf/Heizkreislauf eines Kraftfahrzeugs, mit einem Stator und einem von dem Stator durch ein Rohr getrenntem, im Kühlwasser eingetauchten und ein Flügelrad tragenden Rotor.

Das Prinzip der Trennung von Stator und Rotor durch ein Rohr, das es ermöglicht, den Rotor im Kühlwasser eingetaucht anzuordnen, ist aus DE 3 702 028 C2 bekannt.

Eine detailliertere Beschreibung einer solchen Pumpe ist in DE 44 11 960 A1 zu finden. Die in dieser Schrift dargestellte Pumpe besitzt einen glockenförmigen Rotor, in dessen zylindrischen Innenraum der Stator eingreift. Eine rohr- beziehungsweise becherförmige Wandung verläuft zwischen Rotor und Stator, wobei am Boden des Bechers eine Welle eingelassen ist, um die der Rotor drehbar aufgehängt ist.

Die Verankerung der Welle reicht nur auf einer geringen Tiefe in das Innere des zylindrischen Hohlraums hinein, denn der Platz in diesem wird fast vollständig zur Unterbringung des Stators benötigt. Die zylindrische Wandung zwischen Stator und Rotor ist sehr dünn, um eine geringe Spaltbreite und damit geringe Magnetkreisverluste zu erzielen. Dies beeinträchtigt die Stabilität der Aufhängung des Rotors.

Eine Leiterplatte mit einer Kommutierungsschaltung für die Stromversorgung des Stators kann nur in dessen axialer Verlängerung angeordnet werden und erhöht so die Einbautiefe der Pumpe.

Aus der GB-a-2 042 279 ist eine Flüssigkeitspumpe bekannt mit einem Stator und einem Rotor, der vom Stator durch ein Rohr getrennt ist. Der ein Flügelrad bildende Rotor ist im Kühlwasser eingetaucht und radial innerhalb des Stators angeordnet.

Aus der US-A-4 274 024 ist ein Elektromotor bekannt, bei dem der Stator ein Klauenpolstator ist.

Aus der gattungsbildenden JP 07 208380 A ist eine Flüssigkeitspumpe mit einem Stator und eine, von dem Stator durch ein Rohr getrennter, im Kühlwasser eingetauchter und ein Flügelrad bildender Rotor bekannt.

### Vorteile der Erfindung

Durch die vorliegende Erfindung wird zum einen eine Kühlwasserpumpe mit verringerter Einbautiefe geschaffen. Zum anderen wird eine Kühlwasserpumpe geschaffen, die mit geringem Materialaufwand eine stabile Lagerung des Rotors ermöglicht und so Gleichlaufstörungen infolge von unvermeidlichen Unwuchten wirksam begrenzt, und die darüber hinaus Wirkungsgradverluste aufgrund von Reibung zwischen dem Rotor und dem Kühlwasser, in das er eingetaucht ist, minimiert.

Die kurze Baulänge wird erzielt durch Verwendung eines Klauenpoistators als Stator für die erfindungsgemäße Pumpe.

Die stabile Lagerung und die Verringerung der Reibungsverluste wird dadurch erzielt, dass der Rotor radial innerhalb des Stators angeordnet ist. Während nämlich bei der bekannten Kühlwasserpumpe Reibung mit dem Kühlwasser sowohl an der Innenseite des Rotors zwischen dem Rotor und dem den Stator umgebenden Rohr als auch an der Außenseite zwischen dem Rotor und dem umgebenden Gehäuse auftreten kann, tritt bei der Verlagerung des Rotors ins Innere des Stators nur noch ein Zwischenraum auf, nämlich der zwischen dem Rotor und dem Rohr, das ihn vom Stator trennt. Allein dadurch sind die Reibungsverluste bereits verringert. Ein weiterer Faktor, der zur Verminderung der Reibungsverluste beiträgt, ist, daß bei insgesamt gleichen radialen Abmessungen des Motors der Durchmesser des Rohrs bei innenliegendem Rotor kleiner gehalten werden kann. Daher ist bei gleicher Drehzahl die Bahngeschwindigkeit des Rotors an seinem äußeren Umfang verringert, und infolgedessen auch die Reibung kleiner als bei der herkömmlichen Konstruktion mit außenliegendem Rotor.

Der innenliegende Läufer weist ferner ein verringertes Trägheitsmoment auf und kann deshalb schneller und mit einer geringeren Belastung der elektronischen Schalter seiner Stromversorgungsschaltung beschleunigt werden, als dies bei einem außenliegenden Rotor möglich ist. Das verringerte Trägheitsmoment führt naturgemäß auch zu einer verringerten Unwucht.

Die Verlagerung des Stators an den äußeren Umfang des Rotors erlaubt es ferner, die Welle, auf der der Rotor umläuft, zu verlängern, so daß der Schwerpunkt des Rotors innerhalb der Welle zu liegen kommt. Die Kippmomente, die durch eine Unwucht des Rotors auf die Halterungen der Welle ausgeübt werden, sind dadurch verringert, so daß insgesamt eine geringere Materialstärke der Halterungen genügt, um den Rotor sicher zu verankern.

Um das Trägheitsmoment des Rotors gering zu halten und dennoch eine stabile Lagerung zu erzielen, wird vorgeschlagen, daß der Rotor neben seinem permanentmagnetischen äußeren Zylinder einen die Welle umschließenden Lagerschaft aufweisen soll, der von dem Rotor durch einen leeren Ringraum beabstandet ist. Dieser Ringraum kann an seiner von dem Flügelrad des Rotors abgewandten Seite offen sein.

Vorzugsweise ist der Rotor einstückig aus einem kunststoffgebundenen Magnetmaterial gefertigt.

Weitere Merkmale und Vorteile der Erfindung ergeben sich aus der nachfolgenden Beschreibung von Ausführungsbeispielen mit Bezug auf die Figuren.

Figuren
- Figur 1: zeigt einen axialen Schnitt durch eine erfindungsgemäße Kühlwasserpumpe; und
- Figur 2: zeigt den Stator der Pumpe in einer Explosionsdarstellung.

### Beschreibung der Ausführungsbeispiele

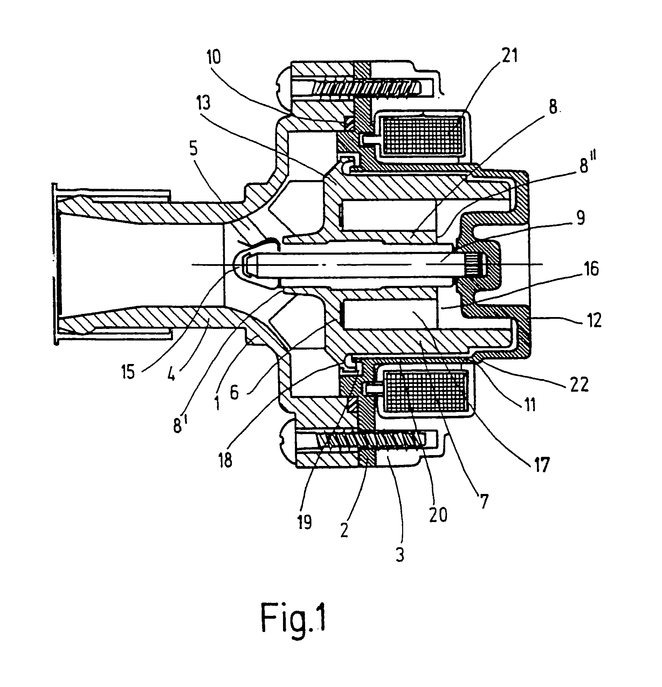

Figur 1 zeigt eine erfindungsgemäße Kühlwasserpumpe in einem axialen Schnitt. Die Pumpe hat ein dreiteiliges Gehäuse, das aus einem Gehäusevorderteil mit einem daran ausgebildeten Saugstutzen 4, und einem nicht dargestellten Druckstutzen, einer Trennwand 2 und einem Gehäusehinterteil 3 besteht, wobei letzteres in der Zeichnung nicht vollständig dargestellt ist. Die Teile 1,2,3 sind durch Schrauben zusammengehalten, die die Trennwand 2 zwischen Vorderteil 1 und Hinterteil 3 eingespannt halten. Ein Dichtring 10 ist zwischen Gehäusevorderteil 1 und Trennwand 2 eingeklemmt. Die Trennwand 2 besteht aus einem nichtmagnetischen Material und besitzt einen dünnwandigen Abschnitt in Form eines Rohrs 11, der zusammen mit einem Boden 12 einen Becher bildet, in dem ein Rotor 6 untergebracht ist.

Der Rotor 6 ist aus einem kunststoffgebundenen Magnetmaterial, zum Beispiel aus in eine Kunstharzmatrix oder Kunststoffmatrix eingebettetem pulverförmigen Magnetmaterial, einstückig, zum Beispiel durch Spritzguß gefertigt und umfaßt einen äußeren Zylinder 7, der mit geringem Abstand dem Verlauf des Rohrs 11 folgt. Der äußere Zylinder 7 ist an seinem dem Ansaugstutzen 4 zugewandten Ende durch einen Flansch 13 verschlossen, der eine Mehrzahl von Flügeln 14 trägt.

Ein mit dem Flansch 13 einstückig verbundener Lagerschaft 8 erstreckt sich durch das Innere des Zylinders 7. Er ist wenigstens an seinen axialen Enden 8', 8" drehbar mit einer ortsfesten Welle 9 verbunden und umschließt sie im wesentlichen auf ihrer gesamten Länge. Die Länge des Lagerschafts ist wenigstens so groß, daß der Schwerpunkt des Rotors 6 zwischen den zwei Enden 8',8" liegt. Die Welle 9 ist an einem ersten Ende in einer Aussparung des Bodens 12 durch eine Rändelung drehfest verankert, ihr zweites Ende ist in der Nabe 14 eines Rippensterns aufgenommen, der mit dem Gehäusevorderteil einstückig ausgebildet ist und von dem nur eine Rippe 5 in der Figur gezeigt ist.

Um das Gewicht des Rotors 6 gering zu halten, ist zwischen dem äußeren Zylinder 7 und dem Lagerschaft 8 ein Ringraum 16 vorgesehen, der bis auf einige dünnwandige Rippen 17 leer ist. Die Rippen 17 dienen zur Versteifung der Verbindung zwischen äußerem Zylinder 7 und Lagerschaft 8.

Eine umlaufende Krempe 18 ist am Übergang zwischen dem äußeren Zylinder 7 und dem Flansch 13 des Rotors angeordnet und greift in eine Ringnut 19 der Trennwand 2 ein, um das Eindringen von festen Verunreinigungen aus dem Kühlwasserstrom in den schmalen Spalt 20 zwischen dem äußeren Zylinder und dem Rohr 11 zu verhindern.

Ein Stator 21 in Klauenpolkonstruktion erstreckt sich um das Rohr 11. Eine (nicht dargestellte) Versorgungsschaltung für den Stator kann zum Beispiel auf einer ringförmigen Leiterplatte montiert und auf eine Schulter 22 des Rohrs 11 aufgesteckt werden, wo sie die axiale Baulänge der Pumpe nicht erhöht.

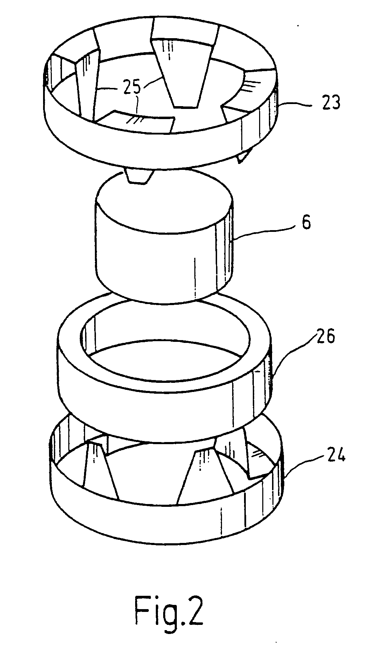

Figur 2 zeigt den Aufbau des Stators 21 in einer Explosionsdarstellung. Er umfaßt zwei Statorbleche 23,24 von jeweils identischer Gestalt, mit einem umlaufenden äußeren Ring und einer Mehrzahl von Klauen 25, hier vier Stück an jedem Blech, die ausgehend von einem Rand des Blechs 23 beziehungsweise 24 radial nach innen und dann in Richtung des gegenüberliegenden Randes gebogen sind. Die Klauen 25 erstrecken sich trapezförmig zulaufend in axialer Richtung. Hierdurch wird eine Verbesserung des Wirkungsgrades des Motors erreicht. Die beiden Bleche 23,24 bilden einen ringförmigen Hohlraum, dessen Innenwand jeweils durch die ineinandergreifenden Klauen 25 der zwei Statorbleche gebildet ist, und der eine Wicklung 26 aufnimmt. Ein von der Wicklung 26 erzeugtes Magnetfeld greift mit jeweils wechselnder Polarität von den Klauen 25 der zwei Bleche radial nach innen und treibt so den Rotor 6 an, der in Figur 2 ohne seine Flügel dargestellt ist. Die Wicklung 26 ist bifilar aufgebaut, das heißt sie umfaßt zwei getrennt und unabhängig voneinander mit einem Strom beaufschlagbare Kreise. Dies erlaubt es, Magnetfelder mit alternierender Polung zu erzeugen, indem jeweils nur einer der Kreise mit Strom beaufschlagt wird, wobei die Stromrichtung jedes Kreises immer die gleiche und zu der des anderen Kreises entgegengesetzt ist. Ein solcher Stator kann mit einer einfacheren Leistungselektronik betrieben werden als ein unifilarer Aufbau.

Ein nicht dargestellter Hallsensor kann als Magnetfeldsensor zur Überwachung der Funktion oder der Geschwindigkeit der Pumpe an einem Ort vorgesehen werden, wo er dem veränderlichen Magnetfeld des rotierenden Rotors 6 ausgesetzt ist.

Diese Bauform erlaubt es, mit einer einfachen Wicklung in Form einer Zylinderspule eine hohe Polpaarzahl zum Antrieb des Rotors zu realisieren. Diese Zahl ist durch die Zahl der Klauen 25 festgelegt. Um die Antriebsleistung der Pumpe zu steigern, können Statoren der in Figur 2 gezeigten Art auch zu mehreren axial hintereinander an einem Rotor von geeigneter Länge montiert werden. Dabei können die Klauen der einzelnen Statoren miteinander fluchten, was der Beibehaltung der Strangzahl des Motors gegenüber der Bauform mit einem einfachen Stator entspricht; es kann auch durch eine gestaffelte Verdrehung der Statoren gegeneinander eine Erhöhung der Strangzahl erreicht werden.

## Patentansprüche

1. Flüssigkeitspumpe, insbesondere für den Kühlkreislauf eines Kraftfahrzeugs, mit einem Stator (21) und einem von dem stator (21) durch ein Rohr (11) getrennten, im Kühlwasser eingetauchten und ein Flügelrad bildenden Rotor (6), **dadurch gekennzeichnet, dass** der Stator (21) ein Klauenpolstator ist und dass der Rotor (6) einen permanentmagnetischen äußeren Zylinder (7) und einen die Welle (9) umschließenden Lagerschaft (8) aufweist, die durch einen leeren Ringraum (16) beabstandet sind, wobei der Rotor (6) an seinem dem Ansaugstutzen (4) zugewandten Ende durch einen Flügel tragenden Flansch (13) verschlossen ist.

2. Flüssigkeitspumpe nach Anspruch 1, **dadurch gekennzeichnet, dass** der Rotor (6) radial innerhalb des Stators (21) angeordnet ist.

3. Flüssigkeitspumpe nach Anspruch 2, **dadurch gekennzeichnet, dass** der Rotor (6) an wenigstens zwei axial beabstandeten beabstandeten Orten (8', 8") mit einer Welle (9) verbunden ist, und dass der Schwerpunkt des Rotors (6) zwischen den zwei Orten liegt.

4. Flüssigkeitspumpe nach Anspruch 1, **dadurch gekennzeichnet, dass** der äußere Zylinder (7) und der Lagerschaft (8) durch radiale Rippen (17) verbunden sind.

5. Flüssigkeitspumpe nach Anspruch 1 oder 4, **dadurch gekennzeichnet, dass** der Ringraum (16) an seiner von den Flügeln (14) des Rotors abgewandten Seite offen ist.

6. Flüssigkeitspumpe nach einem der vorhergehenden Ansprüche, **dadurch gekennzeichnet, dass** der Rotor einstückig aus einem kunststoffgebundenen Magnetmaterial gefertigt ist.

7. Flüssigkeitspumpe nach einem der vorhergehenden Ansprüche, **dadurch gekennzeichnet, dass** ein Magnetfeldsensor, insbesondere ein Hallsensor, im Magnetfeld des Rotors angeordnet ist.

8. Flüssigkeitspumpe nach einem der vorhergehenden Ansprüche, **dadurch gekennzeichnet, dass** die Klauen (25) trapezförmig sind.

9. Flüssigkeitspumpe nach einem der vorhergehenden Ansprüche, **dadurch gekennzeichnet, dass** die Statorwicklung (21) als bifilare Wicklung ausgeführt ist.

## Claims

1. Liquid pump, in particular for the cooling circuit of a motor vehicle, with a stator (21) and with a rotor (6) which is separated from the stator (21) by a tube (11), is immersed in the cooling water and forms a vane wheel, **characterized in that** the stator (21) is a claw-pole stator, and **in that** the rotor (6) has a permanently magnetic outer cylinder (7) and a bearing stem (8) surrounding the shaft (9), the said cylinder and bearing stem being spaced apart by means of an empty annular space (16), the rotor (6) being closed, at its end facing the intake connection piece (4), by a vane-carrying flange (13).

2. Liquid pump, according to Claim 1, **characterized in that** the rotor (6) is arranged radially within the stator (21).

3. Liquid pump, according to Claim 2, **characterized in that** the rotor (6) is connected to a shaft (9) at at least two axially spaced-apart locations (8', 8"), and **in that** the centre of gravity of the rotor (6) lies between the two locations.

4. Liquid pump, according to Claim 1, **characterized in that** the outer cylinder (7) and the bearing stem (8) are connected by means of radial ribs (17).

5. Liquid pump, according to Claim 1 or 4,
**characterized in that** the annular space (16) is open on its side facing away from the vanes (14) of the rotor.

6. Liquid pump, according to one of the preceding claims, **characterized in that** the rotor is manufactured in one piece from a plastic-bound magnetic material.

7. Liquid pump, according to one of the preceding claims, **characterized in that** a magnetic-field sensor, in particular a Hall sensor, is arranged in the magnetic field of the rotor.

8. Liquid pump, according to one of the preceding claims, **characterized in that** the claws (25) are trapezoidal.

9. Liquid pump, according to one of the preceding claims, **characterized in that** the stator winding (21) is designed as a bifilar winding.

## Revendications

1. Pompe à liquide, en particulier pour le circuit de refroidissement d'un véhicule automobile, comprenant un stator (21) et un rotor (6) séparé du stator (21) par un tube (11), plongé dans l'eau de refroidissement et formant une roue à ailettes,
**caractérisée en ce que**
le stator (21) est un stator à pôles à griffes et le rotor (6) présente un cylindre (7) extérieur à aimantation permanente et une tige de palier (8) entourant l'arbre (9), écartés l'un de l'autre par une chambre annulaire (15) vide, le rotor (6) étant fermé à son extrémité tournée vers le raccord d'aspiration (4) par une bride (13) portant une aile.

2. Pompe à liquide selon la revendication 1,
**caractérisée en ce que**
le rotor (6) est disposé radialement à l'intérieur du stator (21).

3. Pompe à liquide selon la revendication 2,
**caractérisée en ce que**
le rotor (6) est relié à un arbre (9) en au moins deux points (8', 8") axialement écartés, et le centre de gravité du rotor (6) se situe entre les deux points.

4. Pompe à liquide selon la revendication 1,
**caractérisée en ce que**
le cylindre (7) extérieur et la tige de palier (8) sont reliés par des nervures (17) radiales.

5. Pompe à liquide selon la revendication 1 ou 4,
**caractérisée en ce que**
la chambre annulaire (16) est ouverte du côté opposé aux ailes (14) du rotor.

6. Pompe à liquide selon l'une quelconque des revendications précédentes,
**caractérisée en ce que**
le rotor est fabriqué d'une seule pièce à partir d'un matériau magnétique lié par matière plastique.

7. Pompe à liquide selon l'une quelconque des revendications précédentes,
**caractérisée par**
un capteur de champ magnétique, en particulier un capteur Hall, dans le champ magnétique du rotor.

8. Pompe à liquide selon l'une quelconque des revendications précédentes,
**caractérisée en ce que**
les griffes (25) ont la forme d'un trapèze.

9. Pompe à liquide selon l'une quelconque des revendications précédentes,
**caractérisée en ce que**
le bobinage de stator (21) est un bobinage bifilaire.
